# EUROPEAN PATENT APPLICATION

(11) **EP 4 349 631 A1**
(43) Date of publication of application: **10.04.2024**
(21) Application number: 22199727.3
(22) Date of filing: 05.10.2022
(51) Int. Cl.: B60K 35/00, B60K 37/06, B60R 1/00, B60N 2/90

(54) **VEHICLE INTERFACE SYSTEM FOR DRIVER ASSISTANCE**

(71) Applicant: VOLVO TRUCK CORPORATION, 405 08 Göteborg (SE)
(72) Inventor: COURTENS, Fabrice, 69300 CALUIRE ET CUIRE (FR)
(74) Representative: Lavoix

(57) **Abstract**

The disclosure relates to a vehicle interface system (50) for assisting the driver of a vehicle, comprising :
- a set of proximity sensors for detecting an object (O) present in a vicinity of a vehicle body (90),
- a set of haptic actuators configured for being integrated in different zones of a driver seat,
- a screen configured for displaying a bird view (V) of the vehicle,

in which the vehicle interface system is configured for activating at least one haptic actuator in response to a detection of an object (O) by at least one of the proximity sensors, and
in which the vehicle interface system is further configured for displaying a warning signal (W) on the bird view (V) displayed on the screen, the warning signal (W) indicating the position of the detected object (O) relatively to the vehicle body (90).

## Description

### Technical Field

This disclosure relates to a step assembly for equipping an industrial vehicle, like a porter truck or a long-haul truck.

### Background Art

Because of the large dimensions of a truck, visibility of other road users may be an issue for the driver of a truck. Even though a truck is generally equipped with large dimensions mirrors, blind spots usually exist, for example along the sides of a trailer truck. Furthermore, because of the high seating position of the driver, visibility of objects located close to ground level directly in front of the truck may be low. These visibility issues are a hazard for the other road users, particularly in urban driving conditions in which many vulnerable road users like push-bikes or motorbikes are more and more present.

In order to reduce these hazards, the truck may be equipped with cameras associated to a display screen, in order to avoid or reduce blind spots. Furthermore, some automatic image processing may be implemented to put into evidence the possible hazards and generate warnings for the driver. Although very useful, these systems may be quite difficult to use for the driver, because of the constant information flow that is likely to be induced, especially in congested urban conditions. Therefore, the truck driver may sometimes miss some of the information transmitted by the cameras and driving assistance system. Furthermore, the driver tends to be distracted from the actual driving. The large flow of information received by the driver is also quite tiring, which increases the risks.

There is therefore a need for a driving assistance system that warns the driver of the possible hazards without overloading him with too many and too frequent information.

### Summary

To this end, it is proposed a vehicle interface system for assisting the driver of a vehicle, comprising :
- a set of proximity sensors for detecting an object present in a vicinity of a vehicle body,
- a set of haptic actuators configured for being integrated in different zones of a driver seat,
- a screen configured for displaying a bird view of the vehicle,

in which the vehicle interface system is configured for activating at least one haptic actuator in response to a detection of an object by at least one of the proximity sensors, and
in which the vehicle interface system is further configured for displaying a warning signal on the bird view displayed on the screen, the warning signal indicating the position of the detected object relatively to the vehicle body.

The vehicle interface system can deliver two different signals to the driver. One signal is a haptic signal delivered through the driver seat. The second signal is a warning signal displayed on a bird view of the vehicle. The driver may concentrate of his driving and check the bird view of the vehicle only when a vibration from a haptic actuator is perceived. As long as no vibration is perceived in his seat, there is no need to check the bird view of the screen. The mental load associated with continuous survey of a bird view of the vehicle is eliminated, or at least largely reduced.

The following features can optionally be implemented, separately or in combination one with the others:

Each proximity sensor of the set of proximity sensors is configured for detecting an object present in a coverage area of the proximity sensor, the coverage area extending around the vehicle body.

The vehicle interface system comprises a set of cameras configured for acquiring images of the environment around the body of the vehicle.

According to an aspect of the vehicle interface system, the activated haptic actuator is selected in order to indicate an angular position of the detected object relatively to the vehicle body.

The driver may identify the zone of the vehicle where a risk is present from the zone of the seat in which the vibration is perceived. Therefore the driver receives a first level of warning without having to stop watching the road.

In an embodiment of the vehicle interface system, the activated haptic actuator is selected according to a correspondence table between a position relatively to the vehicle body of the proximity sensor detecting an object and the position relatively to the seat of the haptic actuators.

The correspondence between the position of the proximity detector detecting a hazard and the position in the seat of the activated actuator is chosen to be intuitive for the driver. For example, the notion of left/right of the vehicle match left/right of the seat.

According to an aspect of the disclosure, the vehicle interface system comprises a set of cameras configured for acquiring images of the vehicle surroundings and an image reconstruction device configured for generating a bird-view of the vehicle from the acquired images.

In an embodiment, the vehicle interface system is configured for activating two different haptic actuators in response to a detection of an object by two different proximity sensors.

This is the case when the number of haptic actuators matches the number of proximity sensors.

In another embodiment of the vehicle interface system, the vehicle interface system is configured for activating one single haptic actuator in response to a detection of an object by two different proximity sensors.

This is the case when the number of haptic actuators is smaller than the number of proximity sensors. A detection of an object by two different proximity sensors may trigger the activation of a single haptic actuator, particularly if the detection comes from two consecutive proximity sensors.

According to an embodiment, the screen is switched on for displaying the bird view of the vehicle in response to a detection of an object by at least one of the proximity sensors.

In an embodiment, the vehicle interface system is configured for forcing a display of the bird view of the vehicle and a display of the warning signal on the bird view in response to a detection of an object by at least one of the proximity sensors.

According to an embodiment, the vehicle interface system comprises:
- a set of cameras configured for acquiring images of the surroundings of the vehicle, and
- an electronic control unit configured for generating a reconstructed bird-view of the vehicle and its surroundings from the images acquired by the set of cameras.

In an example of implementation, the set of cameras may comprise:
- a first camera acquiring images from a front left area of the vehicle,
- a second camera acquiring images from a front center area of the vehicle,
- a third camera acquiring images from a front right area of the vehicle.

In an embodiment, the set of cameras may further comprise:
- a fourth camera acquiring images from a rear center area of the vehicle.

In a particular embodiment, the set of cameras may further comprise:
- a fourth camera acquiring images from a rear left area of the vehicle,
- a fifth camera acquiring images from a rear right area of the vehicle.

In an example of implementation of the vehicle interface system, at least some of the cameras of the set of cameras are configured for transmitting images by a wireless communication.

The cameras are thus easy to integrate on the trailer of a trailer-truck assembly.

In an embodiment, the view angle of a camera is comprised between 120° and 180°.

In an embodiment of the vehicle interface system, the set of proximity sensors comprises between five and fifteen proximity sensors.

For example, the set of proximity sensors comprises 12 sensors.

In an embodiment of the vehicle interface system, a coverage area of the proximity sensors is defined by an angle comprised between 100° and 140°.

In an embodiment of the vehicle interface system, the set of proximity sensors comprises ultrasonic sensors.

Alternatively or as a complement, the set of proximity sensors comprises laser distance sensors.

Alternatively or as a complement, the set of proximity sensors comprises cameras.

According to an aspect of the vehicle interface system, the set of haptic actuators comprises at least a first pair of haptic actuators configured to be integrated in a seat cushion of the driver seat and at least a second pair of haptic actuators configured to be integrated in a backrest of the driver seat.

For example, the set of haptic actuators may comprise three pairs of haptic actuators disposed in the backrest of the seat.

The set of haptic actuators may further comprise two pairs of haptic actuators disposed in the seat cushion of the seat.

The two actuators of a pair of haptic actuators may be disposed symmetrically along a longitudinal axis of the seat.

Each pair of haptic actuators is staggered along the longitudinal axis of the seat.

Preferably, the coverage area of two consecutive proximity sensors overlap each other.

According to an embodiment, a gap may exist between the coverage area of two consecutive proximity sensors.

In an embodiment, the vehicle interface system comprises a selector configured for selecting a sensitivity of the detection of an object by at least one of the proximity sensors, the sensitivity being selected between a set of predefined sensitivities.

The sensitivity of the warning generation is adapted to the driving conditions. The goal is to limit the occurrence of unnecessary warnings, and to generate warnings only for a real hazard.

The set of sensitivities may for example comprise three sensitivities.

In an embodiment of the vehicle interface system, the selector is for example a rotary switch configured for being manually orientated.

In an alternative embodiment, the selector may be automatically set in function of the vehicle speed.

The disclosure also relates to a control method of a vehicle interface system for assisting the driver of a vehicle, the vehicle interface system comprising :
- a set of proximity sensors for detecting an object present in a vicinity of a vehicle body,
- a set of haptic actuators configured for being integrated in different zones of a driver seat,
- a screen configured for displaying a bird view of the vehicle, the control method comprising the steps :
   (i) activating at least one haptic actuator in response to a detection of an object by at least one of the proximity sensors, and
   (ii) displaying a warning signal on the bird view displayed on the screen, the warning signal indicating the position of the detected object relatively to the vehicle body.

The control method comprises the step:
- detecting an object present in a vicinity of a vehicle body.

The disclosure also concerns an aftermarket kit comprising:
- a vehicle interface system as described above,
- a set of cameras configured for acquiring images of the surroundings of the vehicle, and
- an electronic control unit configured for generating a reconstructed bird-view of the vehicle and its surroundings from the acquired images.

The disclosure relates as well to a truck comprising a vehicle interface system as described earlier, in which the set of proximity sensors for detecting an object present in a vicinity of the truck body is integrated in different zones of the truck body, and in which the set of haptic actuators is integrated in different zones of a driver seat.

The truck may for example be a porter truck, or a long-haul truck.

### Brief Description of Drawings

Other features, details and advantages will be shown in the following detailed description and on the figures, on which:
- Figure 1 is a schematic side view of an industrial vehicle equipped with a vehicle interface system according to the disclosure,
- Figure 2 is a schematic top view of the industrial vehicle of figure 1,
- Figure 3 is a perspective view of a seat integrating some components of a vehicle interface system,
- Figure 4 is a schematic view of an example of bird view generated by the vehicle interface system,
- Figure 5 shows a detail of a component of the vehicle interface system,
- Figure 6 is a schematic view of an aftermarket kit comprising a vehicle interface system.

### Description of Embodiments

In order to make the figures easier to read, the various elements are not necessarily represented to scale. In these figures, identical elements receive the same reference number. Certain elements or parameters can be indexed, that is to say designated for example by 'first element' or second element, or first parameter and second parameter, etc. The purpose of this indexing is to differentiate elements or parameters that are similar, but not identical. This indexing does not imply a priority of one element, or one parameter over another, and their names can be interchanged. When it is mentioned that a subsystem comprises a given element, the presence of other elements in this subsystem is not excluded.

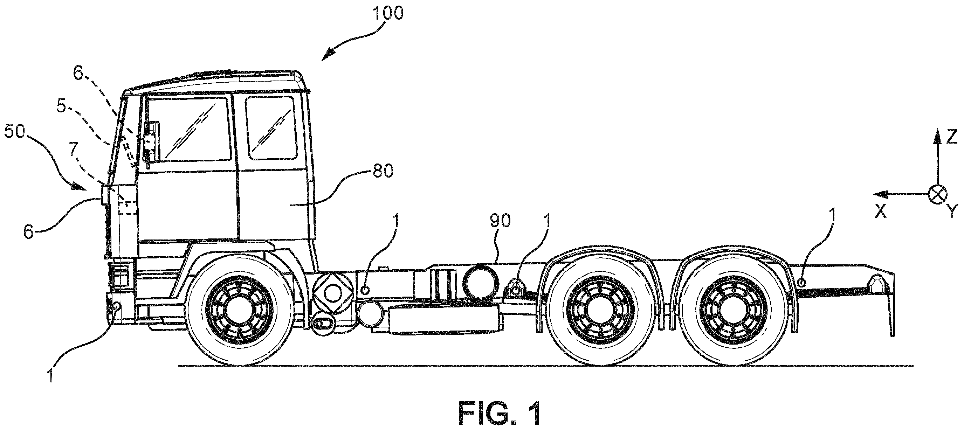

Figure 1 illustrates a truck 100. The truck 100 is here a porter truck. It also could be a long-haul truck. Sign 90 refers to the body of the truck 100. X axis is the longitudinal axis of the truck, Y the transversal axis of the truck, and Z is the vertical axis.

The truck 100 comprises a vehicle interface system 50 for assisting the driver of the vehicle, that will be detailed below.

The vehicle interface system 50 comprises a set of proximity sensors 1 for detecting an object O present in a vicinity of the truck body 90. The set of proximity sensors 1 is integrated in different zones of the truck body 90. A set of haptic actuators 2 is integrated in different zones 3 of a driver seat 4.

More precisely, the proposed vehicle interface system 50 for assisting the driver of a vehicle comprises :
- a set S1 of proximity sensors 1 for detecting an object O present in a vicinity of a vehicle body 90,
- a set S2 of haptic actuators 2 configured for being integrated in different zones 3 of a driver seat 4,
- a screen 5 configured for displaying a bird view V of the vehicle.
The vehicle interface system 50 is configured for activating at least one haptic actuator 2 in response to a detection of an object O by at least one of the proximity sensors 1, and is further configured for displaying a warning signal W on the bird view V displayed on the screen 5, the warning signal W indicating the position of the detected object O relatively to the vehicle body 90.

The vehicle interface system 50 can deliver two different kind of signals to the driver. One signal is a haptic signal delivered through the driver seat 4. The haptic signal is here a vibration transmitted through the seat and that can be perceived by the driver when he's seated in a normal driving position. The second signal is a visual warning signal W displayed on a bird view of the vehicle. The driver may thus concentrate of his driving and check the bird view on the screen 5 only when a vibration from a haptic actuator 2 is perceived. By looking the bird view image, the driver can visualize the location of the detected hazard relatively to the truck. As long as no vibration is perceived in his seat, there is no need to check the bird view V displayed on the screen, since no warning signal is supposed to be displayed. The mental load associated with a continuous survey of a bird view V of the vehicle is eliminated, or at least largely reduced.

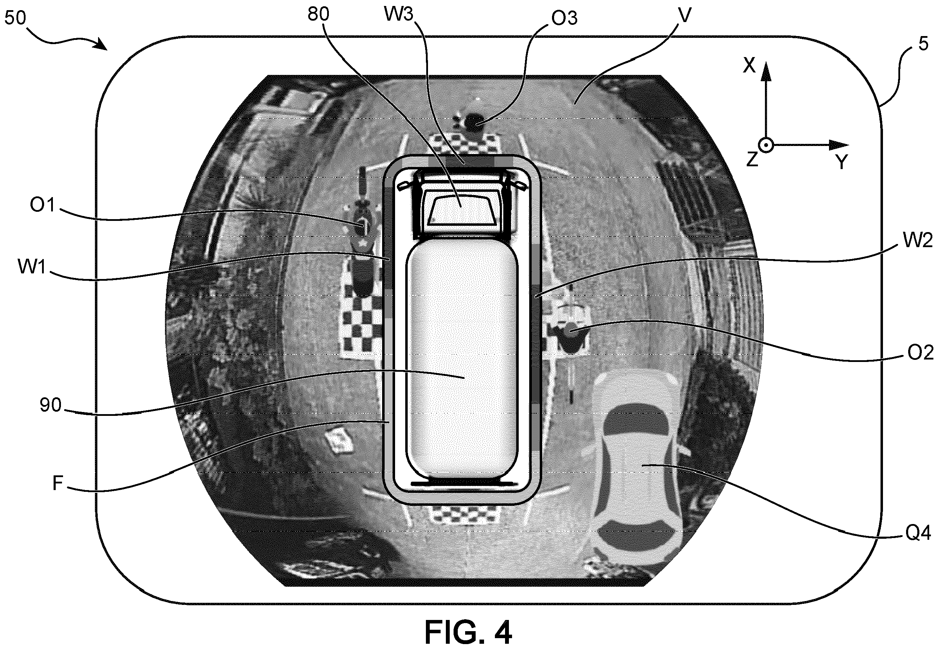

A bird view V of the vehicle 100 is a reconstructed image showing the vehicle 100 and the surrounding elements as if they were seen from above. The vehicle usually stands in the center of the reconstructed image, oriented vertically on the screen 5, with the front of the vehicle 100 facing towards the top of the screen 5 and the back of the vehicle 100 facing the bottom of the screen 5. Figure 4 provides an example of a bird-view V. The screen 5 can be disposed on the dashboard of the truck. The screen is usually offset from the area that the driver faces directly, and in which the main instruments are concentrated. Thus the screen is offset in direction of the centerline of the cabin, still closer to the driver than to the passenger.

In the present disclosure, 'object' is a generic term describing any element or item that may be detected. The word 'object' encompasses material objects and living beings. For example, a pedestrian can be detected. A motorbike and its rider can also be detected. A fixed obstacle like a wall, a post or a tree can also be detected.

Truck 'body' means here any element of the truck defining a part of its periphery, and that may enter into contact with another road user or object. The term 'body' therefore encompasses bodywork, wheels, part of chassis or subframe close to the periphery of the truck.

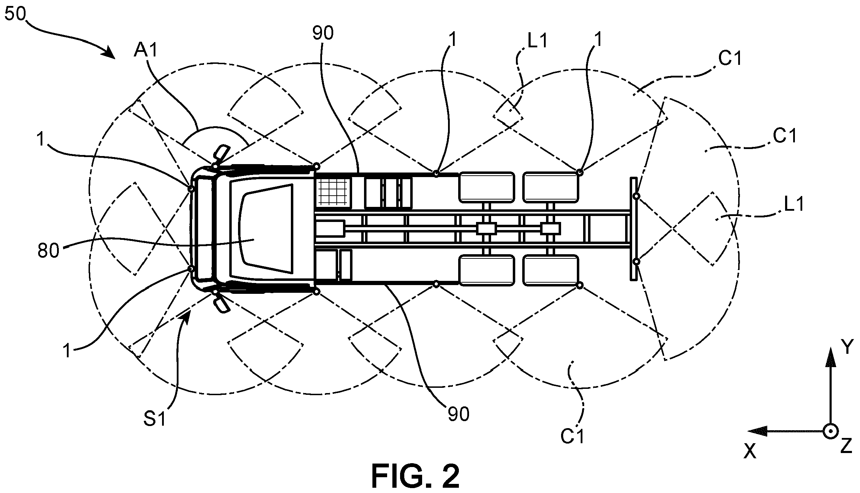

Figure 2 is a view from above the truck 100, indicating the location of the main components of the vehicle interface system 50.

The proximity sensors 1 scan the spatial environment around the vehicle body 90. Each proximity sensor 1 of the set S1 of proximity sensors is configured for detecting an object O present in a coverage area C1 of the proximity sensor 1, the coverage area C1 extending around the vehicle body 90.

The vehicle interface system 50 comprises a set of cameras 6 configured for acquiring images of the environment around the body 90 of the vehicle 100.

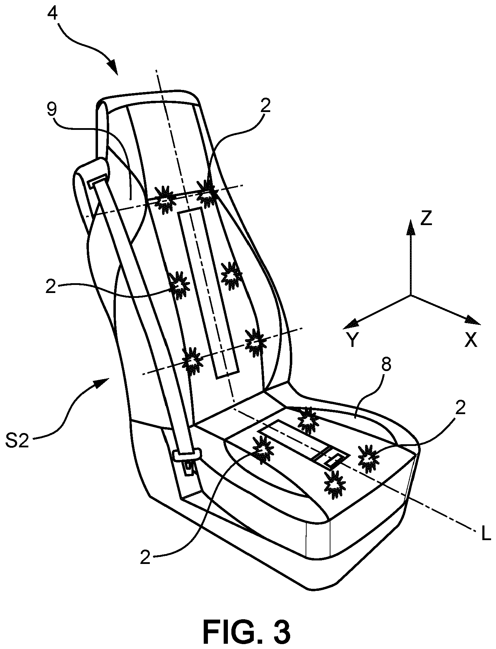

Figure 3 illustrates a seat 4 equipped with a set of haptic actuators 2.

A haptic actuator 2 is an actuator that generates vibrations when it is activated. The frequency and the amplitude of the vibrations are selected to be perceived by the driver when he's seated on the seat 4.

The haptic actuator 2 may comprise a rotating mass linked to an electric motor. The center of rotation, or the/ axis of rotation of the mass may be offset from its gravity center so that vibrations are generated when the rotation of the electric motor is activated.

The haptic actuators 2 are disposed in cavities of the seat foam. The haptic actuators 2 are covered by the seat fabric. The haptic actuators 2 are not visible once the assembly of the seat 4 is completed. An electronic control unit, not represented, can control each haptic actuator. The electronic control unit may be located under the seat cushion. The electrical harness connecting the control unit with each haptic actuator can travel through the seat foam. Each haptic actuator can be selectively activated independently from the others.

The set of haptic actuators 2 comprises at least a first pair of haptic actuators 2 configured to be integrated in a seat cushion 8 of the driver seat 4 and at least a second pair of haptic actuators 2 configured to be integrated in a backrest 9 of the driver seat 4.

On the example of figure 3, the set of haptic actuators 2 comprises three pairs of haptic actuators 2 disposed in the backrest 9 of the seat 4. The set of haptic actuators 2 further comprises two pairs of haptic actuators 2 disposed in the seat cushion 8 of the seat 4.

The two actuators of a pair of haptic actuators 2 are here disposed symmetrically along a longitudinal axis L of the seat 4. Therefore, the driver receives an equivalent signal whether a hazard is detected on the left side or on the right side of the truck.

It is to be noted that the longitudinal axis L of the seat 4 is parallel to the longitudinal axis X of the truck when the seat 4 is in a position corresponding to driving.

Each pair of haptic actuators 2 is staggered along the longitudinal axis L of the seat 4. In other words, a pair of haptic actuators is located in the backrest 9 near the shoulders of the driver, another about halfway between the shoulders and the waist, another near the waist, still in the backrest. In the seat cushion, one pair of actuators is located near the top of the driver thighs and one pair near his knees. Any number of haptic actuators can be fitted into the seat.

The activated haptic actuator 2 is selected in order to indicate an angular position of the detected object O relatively to the vehicle body 90.

The driver may identify the zone of the vehicle in which a risk is present from the zone of his seat 4 in which the vibration is perceived. Therefore the driver receives a first level of warning without having to stop watching the road. The driver may thus focus on his driving at critical moments.

The activated haptic actuator 2 is selected according to a correspondence table between a position relatively to the vehicle body of the proximity sensor 1 detecting an object O and the position relatively to the seat 4 of the haptic actuators 2.

The correspondence between the position of the proximity detector detecting a hazard and the position in the seat of the activated actuator is chosen to be intuitive for the driver. For example, the notion of left/right sides of the vehicle 100 match the left/right sides of the seat 4.

If an object O is detected by a proximity sensor 1 located on the left of the truck 100, the haptic actuator 2 that is activated is one located on the left side of the seat 4. In the same manner, an object detected on the right side of the truck will trigger the activation of a haptic actuator integrated in the right side of the seat 4.
If an object O is detected at the front of the vehicle 100, the haptic sensor 2 that is activated is one which is located in the front part of the seat 4, i.e in the area closest to the knees of the driver.
Correspondingly, if an object O is detected at the rear of the vehicle 100, the haptic sensor 2 that is activated is one located near the top part of the seat 4, ie in the area of the backrest closed to the shoulders of the driver.
An object detected near the middle of the truck, relatively to a fore/aft direction, will trigger the activation of a haptic actuator disposed near the waist of the driver.
Any other correspondence relationship between the detected zone and the activated haptic actuator can be chosen. An intuitive correspondence relationship, easy to remember, is much preferred.

The duration of activation of a haptic actuator is comprised between 0.1 second and 2 seconds. The duration of activation may depend on the angular position of the detected object O relatively to the vehicle body 90.

Figure 4 also illustrates the visual warning signals W that are generated and displayed on the screen 5 when an object O is detected close to the vehicle body 90.

On this example, a motorbike user O1 is located on the left side on the truck, close to the cabin 80. This road user is close enough to be detected, and a first warning signal W1 is displayed on the screen 5. At the same time, a push-bike user O2 is located on the right side of the truck, longitudinally near the mid-section of the truck. The distance between the truck body and user O2 is small enough to activate the generation of a second warning signal W2. Furthermore, a pedestrian O3 is crossing the road directly in front of the truck. This pedestrian is also close enough to be detected, and a third warning signal W3 is simultaneously displayed. The car with the reference sign Q4 is distant enough from the truck body not to be detected. Therefore, no particular warning is associated with this car Q4. Similarly, the whole area around the rear left corner of the truck is empty. Reference sign F indicates one part of the screen in which no particular warning is displayed. The warning signal can be a color code, for example with a red bar near the area of hazard detection and a green bar in the areas with no particular hazard. The transition between the hazard detection areas in red and hazard-free areas in green may comprise a third color like for example orange.

The vehicle interface system 50 is configured for activating two different haptic actuators 2 in response to a detection of an object O by two different proximity sensors 1.

This may be the case when the number of haptic actuators 2 matches the number of proximity sensors 1.

In another embodiment of the vehicle interface system, the vehicle interface system 50 is configured for activating one single haptic actuator 2 in response to a detection of an object O by two different proximity sensors 1.

This may be the case when the number of haptic actuators 2 is smaller than the number of proximity sensors 1. A detection of an object O by two different proximity sensors 1 may trigger the activation of a single haptic actuator 2, particularly if the detection comes from two consecutive proximity sensors 1.

In case multiple objects are simultaneously detected, several haptic actuators can be simultaneously activated.

The vehicle interface system 50 comprises a set of cameras 6 configured for acquiring images of the vehicle surroundings and an image reconstruction device configured for generating a bird-view of the vehicle 100 from the acquired images.

More precisely, the vehicle interface system 50 comprises:
- a set of cameras 6 configured for acquiring images of the surroundings of the vehicle, and
- an electronic control unit 7 configured for generating a reconstructed bird-view of the vehicle and its surroundings from the images acquired by the set of cameras 6.

The electronic control unit 7 comprises memory, algorithms and calculation means to reconstruct a flat view as if taken from above (i.e bird view) from the images acquired by the different cameras. The reconstructed view is a simulated view as if taken from above the vehicle.

According to an embodiment, the screen 5 is switched on for displaying the bird view V of the vehicle in response to a detection of an object O by at least one of the proximity sensors 1.

In other words, the activation of the screen 5 is forced if the screen 5 was not in use by the driver at the moment the detection of a hazard occurred. The screen 5 is forced from an "off" state in which no image is displayed to an activated "On" state in which images are displayed, without any intervention from the driver. In the case where the screen 5 was already in use and displaying a bird view V of the vehicle when the object O is detected, the warning signal W is simply added to the already displayed image.

According to an embodiment, the vehicle interface system 50 is configured for forcing a display of the bird view V of the vehicle and a display of the warning signal W on the bird view V in response to a detection of an object O by at least one of the proximity sensors 1.
If the screen 5 is used for displaying other information than the bird view of the vehicle at the time a hazard is detected, the display of the bird view V and the associated warning signal W takes priority over the information previously displayed. In other words, the information previously displayed is overridden by the display of the bird view V and the associated warning signal W, with no intervention from the driver.

In an example of implementation, the set of cameras 6 may comprise:
- a first camera acquiring images from a front left area of the vehicle,
- a second camera acquiring images from a front center area of the vehicle,
- a third camera acquiring images from a front right area of the vehicle.

Each camera 6 is installed on the truck 100 and acquires images in a coverage area defined by the view angle if the camera. The coverage area, or view angle, depends on the focal length of the lens of the camera.

In an embodiment, the view angle of a camera 6 is comprised between 120° and 180°.

As represented on figure 1, the first camera is for example integrated into the front left external mirror. Similarly, the third camera is for example integrated into the front right external mirror. The second camera may be integrated in the cabin front, near the centerline.

In a non-represented embodiment, the set of cameras 6 may further comprise a fourth camera acquiring images from a rear center area of the vehicle. The fourth camera is for example fixed above the rear doors of a porter truck.

In a particular embodiment, the set of cameras 6 may further comprise:
- a fourth camera acquiring images from a rear left area of the vehicle,
- a fifth camera acquiring images from a rear right area of the vehicle.

In an example of implementation of the vehicle interface system 50, at least some of the cameras of the set of cameras 6 are configured for transmitting images by a wireless communication.

The cameras 6 are thus easy to integrate on the trailer of a trailer-truck assembly. In particular, the cameras may be installed on each side of a trailer without complex wiring with the tractor truck. Cameras can thus be easily dismantled from a trailer and reinstalled on another trailer when trailers are swapped on a given tractor truck.

The set of proximity sensors 1 comprises between five and fifteen proximity sensors 1. On the illustrated example, and as represented on figure 2, the set of proximity sensors 1 comprises 12 sensors.

The coverage area C1 of the proximity sensors 1 is defined by an angle A1 comprised between 100° and 140°.

On the example of figure 2, one proximity sensor 1 is disposed on the front left corner of the vehicle 100 with its coverage area oriented in the forward direction, one proximity sensor 1 is disposed on the front left corner of the vehicle 100 with its coverage area oriented in the transverse direction Y. One proximity sensor is disposed on the rear left corner of the vehicle 100, oriented outwards parallelly to the transverse direction Y. Three proximity sensors are disposed symmetrically on the right side of the vehicle 100. Two more proximity sensors are disposed along each side of the frame. One more proximity sensor is disposed at the rear of the frame, on each side of the rear crossbeam. The representation is schematic and details of implementation, such as fixing brackets for the proximity sensors are not represented. Furthermore, the loading compartment is not represented to make the different elements more apparent.

In an embodiment of the vehicle interface system 50, the set of proximity sensors 1 comprises ultrasonic sensors.

Alternatively, or as a complement, the set of proximity sensors 1 may comprise laser distance sensors.

Alternatively, or as a complement, the set of proximity sensors 1 comprises cameras. In that case, the image from the camera is processed to determine the distance of objects.

Preferably, the coverage area C1 of two consecutive proximity sensors 1 overlap each other. This is the situation illustrated on figure 2, in which the sign L1 represents the regions in which the coverage areas overlap.

According to a non-represented embodiment, a gap may exist between the coverage area of two consecutive proximity sensors 1.

In an embodiment, the vehicle interface system 50 comprises a selector 10 configured for selecting a sensitivity of the detection of an object O by at least one of the proximity sensors 1. The sensitivity is selected between a set of predefined sensitivities.

The sensitivity of the warning generation is adapted to the driving conditions. The goal is to limit the occurrence of unnecessary warnings and generate warnings only for a real hazard. The set of sensitivities may for example comprise three sensitivities.

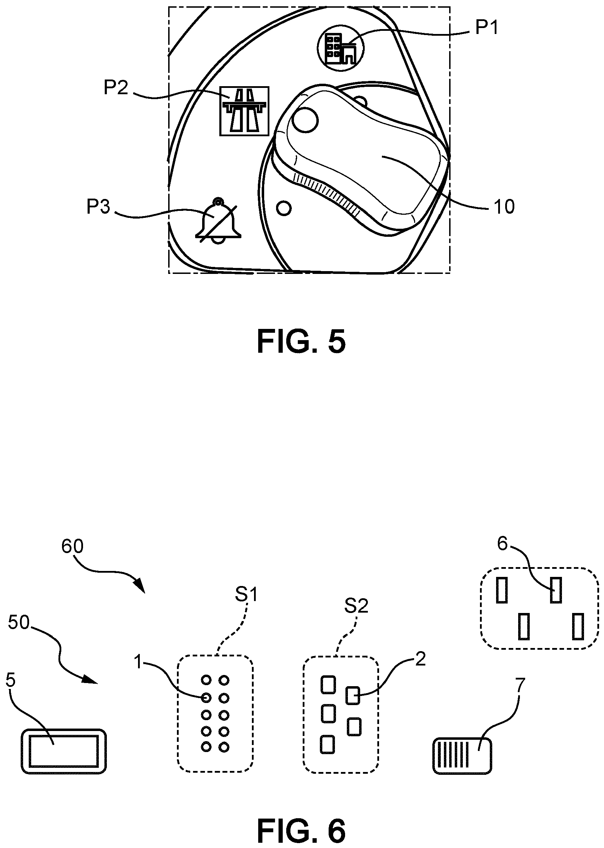

In the example illustrated on figure 5, the selector is a rotary switch 10 to be manually orientated. The rotary switch 10 is for example installed on the dashboard of the vehicle 100. The selector 10 may be rotated by the driver and adjusted according to the driving environment.

A first sensitivity is for example adapted to the driving conditions of a busy city center. This is the kind of place where the number and diversity of vulnerable road users is highest, therefore in which the detection of hazards should be the most sensitive. The first sensitivity is obtained when the selector 10 faces P1 position.
A second sensitivity is for example adapted to the driving conditions of a suburban area, typical of industrial estate zones. The number and diversity of vulnerable road users is lower than in city center, and the sensitivity of the system can be lower. The second sensitivity is obtained when the selector 10 faces P3 position.
A third sensitivity is for example adapted to the driving conditions of motorway. In these conditions, the sensitivity for hazards located near the front of the truck can be very low, and only hazards located in blind-sports corresponding to the side and/or the rear of the vehicle are considered. This third sensitivity is selected when the selector 10 faces P2 position.

In an alternative embodiment, the selector may be automatically set in function of the vehicle speed. In another alternative embodiment, the sensitivity selector may be automatically set in function of the location of the vehicle. The vehicle location is for example determined by GPS coordinates.

The disclosure also relates to a control method of a vehicle interface system 50 for assisting the driver of a vehicle, the vehicle interface system 50 comprising :
- a set S1 of proximity sensors 1 for detecting an object O present in a vicinity of a vehicle body 90,
- a set S2 of haptic actuators 2 configured for being integrated in different zones 3 of a driver seat 4,
- a screen 5 configured for displaying a bird view V of the vehicle.

The control method comprises the steps :
(i) activating at least one haptic actuator 2 in response to a detection of an object O by at least one of the proximity sensors 1, and
(ii) displaying a warning signal W on the bird view V displayed on the screen 5, the warning signal W indicating the position of the detected object O relatively to the vehicle body 90.

The control method comprises the step:
- detecting an object present in a vicinity of a vehicle body 90.

The described vehicle interface system 50 can be installed on the truck 100 as original equipment, which means it is factory fitted during the construction of the truck.

The vehicle interface system 50 can also be part of an aftermarket kit 60 which can be installed on trucks not originally equipped and for which a retrofit is targeted.

The aftermarket kit 60 comprises:
- a vehicle interface system 50 as described above,
- a set of cameras 6 configured for acquiring images of the surroundings of the vehicle 100, and
- an electronic control unit 7 configured for generating a reconstructed bird-view of the vehicle 100 and its surroundings from the acquired images.

The content of an aftermarket kit 60 is schematically represented on figure 6. The fitting accessories like brackets, clamps, seals, wirings have not been represented.

The content of the aftermarket kit may be adapted to the target application, with different models of sensors, haptic actuators and cameras. The number of sensors and cameras can be adapted to offer different levels of sophistication and/or performance.

## Claims

1. A vehicle interface system (50) for assisting the driver of a vehicle, comprising:
- a set (S1) of proximity sensors (1) for detecting an object (O) present in a vicinity of a vehicle body (90),
- a set (S2) of haptic actuators (2) configured for being integrated in different zones (3) of a driver seat (4),
- a screen (5) configured for displaying a bird view (V) of the vehicle,
in which the vehicle interface system (50) is configured for activating at least one haptic actuator (2) in response to a detection of an object (O) by at least one of the proximity sensors (1), and
in which the vehicle interface system (50) is further configured for displaying a warning signal (W) on the bird view (V) displayed on the screen (5), the warning signal (W) indicating the position of the detected object (O) relatively to the vehicle body (90).

2. A vehicle interface system (50) according to claim 1, in which the activated haptic actuator (2) is selected in order to indicate an angular position of the detected object (O) relatively to the vehicle body (90).

3. A vehicle interface system (50) according to claim 1 or 2, in which the activated haptic actuator (2) is selected according to a correspondence table between a position relatively to the vehicle body of the proximity sensor (1) detecting an object (O) and the position relatively to the seat (4) of the haptic actuators (2).

4. A vehicle interface system (50) according to any one of the preceding claims, in which the vehicle interface system (50) is configured for activating two different haptic actuators (2) in response to a detection of an object (O) by two different proximity sensors (1).

5. A vehicle interface system (50) according to any one of the preceding claims, in which the screen (5) is switched on for displaying the bird view of the vehicle in response to a detection of an object (O) by at least one of the proximity sensors (1).

6. A vehicle interface system (50) according to any one of the preceding claims, comprising :
- a set of cameras (6) configured for acquiring images of the surroundings of the vehicle, and
- an electronic control unit (7) configured for generating a reconstructed bird-view of the vehicle and its surroundings from the images acquired by the set of cameras (6).

7. 14. A vehicle interface system (50) according to the preceding claim, in which at least some of the cameras of the set of cameras (6) are configured for transmitting images by a wireless communication.

8. A vehicle interface system (50) according to any one of the preceding claims, in which the set of proximity sensors (1) comprises ultrasonic sensors.

9. 18. A vehicle interface system (50) according to any one of the preceding claims, in which the set of haptic actuators (2) comprises at least a first pair of haptic actuators (2) configured to be integrated in a seat cushion (8) of the driver seat (4) and at least a second pair of haptic actuators (2) configured to be integrated in a backrest (9) of the driver seat (4).

10. A vehicle interface system (50) according to the preceding claim, in which the set of haptic actuators (2) comprises three pairs of haptic actuators disposed in the backrest (9) of the seat (4),
in which the set of haptic actuators comprises two pairs of haptic actuators disposed in the seat cushion (8) of the seat (4),
and in which the two actuators of a pair of haptic actuators (2) are disposed symmetrically along a longitudinal axis (L) of the seat (4).

11. A vehicle interface system (50) according to any one of the preceding claims, comprising a selector (10) configured for selecting a sensitivity of the detection of an object (O) by at least one of the proximity sensors (1), the sensitivity being selected between a set of predefined sensitivities.

12. A vehicle interface system (50) according to the preceding claim, in which the selector is for example a rotary switch (10) configured for being manually orientated.

13. A control method of a vehicle interface system (50) for assisting the driver of a vehicle, the vehicle interface system comprising :
- a set (S1) of proximity sensors (1) for detecting an object (O) present in a vicinity of a vehicle body (90),
- a set (S2) of haptic actuators (2) configured for being integrated in different zones (3) of a driver seat (4),
- a screen (5) configured for displaying a bird view (V) of the vehicle, the control method comprising the steps :
(i) activating at least one haptic actuator (2) in response to a detection of an object (O) by at least one of the proximity sensors (1), and
(ii) displaying a warning signal (W) on the bird view (V) displayed on the screen (5), the warning signal (W) indicating the position of the detected object (O) relatively to the vehicle body (90).

14. An aftermarket kit (60) comprising:
- a vehicle interface system (50) according to any one of claims 1 to 12,
- a set of cameras (6) configured for acquiring images of the surroundings of the vehicle (100), and
- an electronic control unit (7) configured for generating a reconstructed bird-view of the vehicle (100) and its surroundings from the acquired images.

15. A truck (100) comprising a vehicle interface system (50) according to any one of claims 1 to 12, in which the set of proximity sensors (1) for detecting an object (O) present in a vicinity of the truck body (90) is integrated in different zones of the truck body (90), and in which the set of haptic actuators (2) is integrated in different zones of a driver seat (4).

## Amended claims

### Amended claims in accordance with Rule 137(2) EPC.

1. A vehicle interface system (50) for assisting the driver of a vehicle, comprising:
- a set (S1) of proximity sensors (1) for detecting an object (O) present in a vicinity of a vehicle body (90),
- a set (S2) of haptic actuators (2) configured for being integrated in different zones (3) of a driver seat (4),
- a screen (5) configured for displaying a bird view (V) of the vehicle,
in which the vehicle interface system (50) is configured for activating at least one haptic actuator (2) in response to a detection of an object (O) by at least one of the proximity sensors (1), and
in which the vehicle interface system (50) is further configured for displaying a warning signal (W) on the bird view (V) displayed on the screen (5), the warning signal (W) indicating the position of the detected object (O) relatively to the vehicle body (90),
and in which the vehicle interface system (50) is configured for forcing a display of the bird view (V) of the vehicle and a display of the warning signal (W) on the bird view (V) in response to a detection of an object (O) by at least one of the proximity sensors (1).

2. A vehicle interface system (50) according to claim 1, in which the activated haptic actuator (2) is selected in order to indicate an angular position of the detected object (O) relatively to the vehicle body (90).

3. A vehicle interface system (50) according to claim 1 or 2, in which the activated haptic actuator (2) is selected according to a correspondence table between a position relatively to the vehicle body of the proximity sensor (1) detecting an object (O) and the position relatively to the seat (4) of the haptic actuators (2).

4. A vehicle interface system (50) according to any one of the preceding claims, in which the vehicle interface system (50) is configured for activating two different haptic actuators (2) in response to a detection of an object (O) by two different proximity sensors (1).

5. A vehicle interface system (50) according to any one of the preceding claims, in which the screen (5) is switched on for displaying the bird view of the vehicle in response to a detection of an object (O) by at least one of the proximity sensors (1).

6. A vehicle interface system (50) according to any one of the preceding claims, comprising :
- a set of cameras (6) configured for acquiring images of the surroundings of the vehicle, and
- an electronic control unit (7) configured for generating a reconstructed bird-view of the vehicle and its surroundings from the images acquired by the set of cameras (6).

7. A vehicle interface system (50) according to the preceding claim, in which at least some of the cameras of the set of cameras (6) are configured for transmitting images by a wireless communication.

8. A vehicle interface system (50) according to any one of the preceding claims, in which the set of proximity sensors (1) comprises ultrasonic sensors.

9. A vehicle interface system (50) according to any one of the preceding claims, in which the set of haptic actuators (2) comprises at least a first pair of haptic actuators (2) configured to be integrated in a seat cushion (8) of the driver seat (4) and at least a second pair of haptic actuators (2) configured to be integrated in a backrest (9) of the driver seat (4).

10. A vehicle interface system (50) according to the preceding claim, in which the set of haptic actuators (2) comprises three pairs of haptic actuators disposed in the backrest (9) of the seat (4),
in which the set of haptic actuators comprises two pairs of haptic actuators disposed in the seat cushion (8) of the seat (4),
and in which the two actuators of a pair of haptic actuators (2) are disposed symmetrically along a longitudinal axis (L) of the seat (4).

11. A vehicle interface system (50) according to any one of the preceding claims, comprising a selector (10) configured for selecting a sensitivity of the detection of an object (O) by at least one of the proximity sensors (1), the sensitivity being selected between a set of predefined sensitivities.

12. A vehicle interface system (50) according to the preceding claim, in which the selector is for example a rotary switch (10) configured for being manually orientated.

13. A control method of a vehicle interface system (50) for assisting the driver of a vehicle, the vehicle interface system comprising :
- a set (S1) of proximity sensors (1) for detecting an object (O) present in a vicinity of a vehicle body (90),
- a set (S2) of haptic actuators (2) configured for being integrated in different zones (3) of a driver seat (4),
- a screen (5) configured for displaying a bird view (V) of the vehicle, the control method comprising the steps :
(i) activating at least one haptic actuator (2) in response to a detection of an object (O) by at least one of the proximity sensors (1), and
(ii) forcing a display of the bird view (V) of the vehicle and displaying a warning signal (W) on the bird view (V) displayed on the screen (5), the warning signal (W) indicating the position of the detected object (O) relatively to the vehicle body (90), in response to a detection of an object (O) by at least one of the proximity sensors (1).

14. An aftermarket kit (60) comprising:
- a vehicle interface system (50) according to any one of claims 1 to 12,
- a set of cameras (6) configured for acquiring images of the surroundings of the vehicle (100), and
- an electronic control unit (7) configured for generating a reconstructed bird-view of the vehicle (100) and its surroundings from the acquired images.

15. A truck (100) comprising a vehicle interface system (50) according to any one of claims 1 to 12, in which the set of proximity sensors (1) for detecting an object (O) present in a vicinity of the truck body (90) is integrated in different zones of the truck body (90), and in which the set of haptic actuators (2) is integrated in different zones of a driver seat (4).
